# EUROPEAN PATENT APPLICATION

(11) **EP 2 227 007 A2**
(43) Date of publication of application: **08.09.2010**
(21) Application number: 09011672.4
(22) Date of filing: 11.09.2009
(51) Int. Cl.: H04N 5/445, H04N 5/50

(54) **Video signal processing apparatus improved in information updating method and control method for the same**

(30) Priority: 02.03.2009 JP 2009048119
(71) Applicant: Kabushiki Kaisha Toshiba, Minato-ku Tokyo (JP)
(72) Inventor: Kimura, Takahiro, Tokyo (JP)
(74) Representative: HOFFMANN EITLE

(57) **Abstract**

A video signal processing apparatus includes: a receiving section; a reception channel control section for controlling the receiving section to selectively tunes in to channels of a plurality of stations; a service information storage section for storing service information relating to programs of the plurality of stations; a particular station search section for analyzing certain management information on a channel when a tuned channel at the receiving section is switched to the channel, so as to identify a special station; a first updating section for acquiring the service information from the special station to update the service information in the service information storage section; and a second updating section for acquiring the service information by controlling the receiving section to sequentially tune in to channels of the plurality of stations when the particular station search section fails to identify the special station, to update the service information.

## Description

### BACKGROUND

### 1. Field

The present invention relates to a video signal processing apparatus improved in an information updating method as well as to its control method. For example, the invention relates to an apparatus which is improved in a method that is effective in updating program guide information (EPG information).

### 2. Description of Related Art

Recent digital TV broadcast receiving apparatus (hereinafter abbreviated as "broadcast receiving apparatus") have a function of receiving service information (i.e., information relating to broadcast and programs) in addition to video and audio signals and presenting the received service information to the viewer. An example of the service information is electronic program guide information, which is transmitted on a reception channel of a broadcast receiving apparatus. That is, if a broadcast receiving apparatus is tuned to channel A, usually electronic program guide information of various programs to be broadcast on channel A is transmitted.

If a broadcast receiving apparatus needs pieces of electronic program guide information of various programs to be transmitted on multiple channels, the broadcast receiving apparatus is required to acquire those pieces of electronic program guide information corresponding to the respective channels by tuning in to the respective channels. WO 2003/105468 (corresponding to US2005/0193415A1) discloses a technique for realizing such a function.

WO 2003/105468 discloses the following technique. In a non-user-instructed reception state, a broadcast receiving apparatus automatically acquires pieces of electronic program guide information of respective stations (channels) and accumulates them. The non-user-instructed reception state is a standby state, for example. To automatically acquire pieces of electronic program guide information of respective stations, the broadcast receiving apparatus switches the reception channel sequentially to receive broadcast waves transmitted from the respective stations.

### SUMMARY OF THE INVENTION

To acquire electronic program guide information of respective stations, it is necessary for a broadcast receiving apparatus to set a free time slot and to acquire electronic program guide information of each channel every time the reception channel is switched. However, it takes time to update data of electronic program guide information of all stations.

It is an object of the invention to provide a video signal processing apparatus improved in an information updating method, and its control method, which enables the service information such as electronic program guide information to be updated in a short time.

The invention provides a video signal processing apparatus including: a receiving section for receiving broadcast signals; a reception channel control section for controlling the receiving section so that the receiving section selectively tunes in to channels of a plurality of stations; a service information storage section for storing service information relating to programs to be transmitted on the channels of the plurality of stations; a particular station search section for analyzing certain management information that is transmitted on a channel when a tuned channel at the receiving section is switched to the channel, so as to identify whether a station corresponding to the selected channel is a special station sending the service information thereof and of other stations; a first updating section for acquiring the service information of the plurality of stations transmitted on the channel of the special station when the receiving section is tuned to the channel of the special station, and for updating the service information of the respective stations stored in the service information storage section; and a second updating section for acquiring the service information of the plurality of stations by controlling the receiving section to sequentially tune in to channels of the plurality of stations when the particular station search section fails to identify the special station, and for updating the service information of the respective stations stored in the service information storage section.

The invention also provides a control method of a video signal processing apparatus, wherein the apparatus comprises: a memory and a control section for controlling a receiving section for receiving broadcast signals, the method including: controlling the receiving section so that the receiving section selectively tunes in to channels of a plurality of stations; storing service information relating to programs to be transmitted on the channels of the plurality of stations; analyzing management information that is transmitted on a channel when a tuned channel at the receiving section is switched to the channel, so as to identify whether a station corresponding to the selected channel is a special station sending the service information thereof and of other stations; acquiring the service information of the plurality of stations transmitted on the channel of the special station when the receiving section is tuned to the channel of the special station; acquiring the service information of the plurality of stations by controlling the receiving section to sequentially tune in to channels of the plurality of stations when the special station is not identified in the analyzing step; and updating the service information of the respective stations stored in the memory.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is a block diagram of a digital TV broadcast receiving apparatus according to an embodiment of the present invention;

Fig. 2 shows an appearance of a remote controller shown in Fig. 1;

Fig. 3 is a flowchart of an example process that is characteristic of the digital TV broadcast receiving apparatus of Fig. 1;

Figs. 4A-4C show graphic user interfaces (GUIs) which appear on a video display unit as existing pieces of program guide information are updated according to user manipulations.

Fig. 5 is a flowchart of an example process which is characteristic of another embodiment of the invention.

### DETAILED DESCRIPTION

An embodiment of the present invention will be hereinafter described in detail. First, a digital TV broadcast receiving apparatus 41 according to the invention will be outlined.

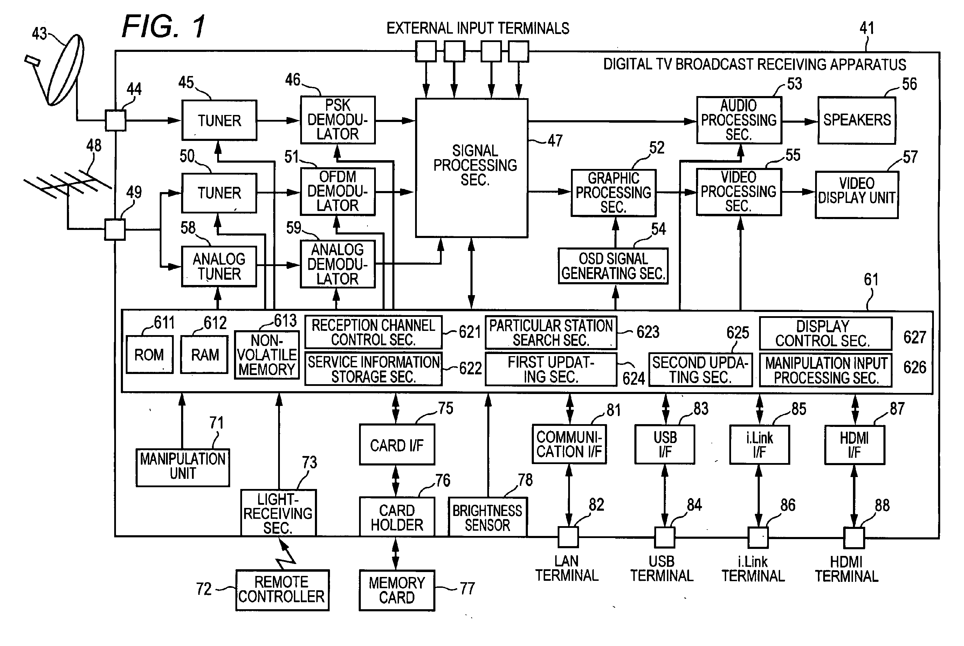

Fig. 1 shows a main part of a signal processing system of the digital TV broadcast receiving apparatus 41. A satellite digital TV broadcast signal received by a BS/CS digital broadcast receiving antenna 43 is supplied via an input terminal 44 to a satellite digital broadcast tuner 45, where a broadcast signal on a desired channel is selected.

The broadcast signal selected by the tuner 45 is supplied to a phase shift keying (PSK) demodulator 46, where it is demodulated into a digital video signal and audio signal, which are output to a signal processing section 47.

A digital terrestrial TV broadcast signal received by a terrestrial broadcast receiving antenna 48 is supplied via an input terminal 49 to a digital terrestrial broadcast tuner 50, where a broadcast signal on a desired channel is selected.

The broadcast signal selected by the tuner 50 is supplied to an orthogonal frequency division multiplexing (OFDM) demodulator 51, where it is demodulated into a digital video signal and audio signal, which are output to the signal processing section 47.

An analog tuner 58 is also provided which receives an analog terrestrial TV broadcast signal. The broadcast signal received by the analog tuner 58 is demodulated by an analog demodulator 59 and the resulting video signal and audio signal are output to the signal processing section 47.

The signal processing section 47 performs prescribed digital signal processing selectively on the digital video signal and audio signal supplied from the PSK demodulator 46, the digital video signal and audio signal supplied from the OFDM demodulator 51, the video signal and audio signal supplied from the analog demodulator 59, and a video signal and audio signal supplied from a line input terminal, and outputs the resulting signals are output to a graphic processing section 52 and an audio processing section 53.

The graphic processing section 52 has a function of superimposing an on-screen display (OSD) signal generated by an OSD signal generating section 54 on the digital video signal supplied from the signal processing section 47, and outputting the resulting signal. The graphic processing section 52 can also selectively output the output video signal of the signal processing section 47 and the output OSD signal of the OSD signal generating section 54, multiplex the two signals, or, combine the two signals so that they are displayed on the respective halves of the screen.

The digital video signal that is output from the graphic processing section 52 is supplied to a video processing section 55. The video processing section 55 converts the received digital video signal into an analog video signal having such a format as to be displayable by a video display unit 57, and outputs the analog video signal to the video display unit 57 to cause its display.

The audio processing section 53 converts the received digital audio signal into an analog audio signal having such a format as to be reproducible by speakers 56, and outputs the analog audio signal to the speakers 56 to cause its reproduction as sound.

All operations including the above various receiving operations of the digital TV broadcast receiving apparatus 41 are supervised by a control section 61.

The control section 61 incorporates a central processing unit (CPU) etc. When receiving manipulation information from a manipulation unit 71 or receiving, via a light receiving section 73, manipulation information that is sent from a remote controller 72, the control section 61 supervises the individual sections so that the content of the manipulation is reflected in the apparatus 41.

In doing so, the control section 61 uses a read-only memory (ROM) 611 which is stored with control programs to be run by the CPU, a random access memory (RAM) 612 which provides a work area for the CPU, and a nonvolatile memory 613 for storing various kinds of setting information and control information etc.

The control section 61 is connected, via a card interface (I/F) 75, to a card holder 76 into which a first memory card 77 can be inserted. The control section 61 can thus exchange information, via the card I/F 75, with the first memory card 77 inserted in the card holder 76.

Although not shown in Fig. 1, the control section 61 may also be connected, via another card I/F, to a card holder into which a second memory card can be inserted.

The control section 61 is connected to a brightness sensor 78. The control section 61 can thus automatically control the screen brightness, for example, by acquiring information indicating ambient brightness.

The control section 61 is connected to a first LAN terminal 82 via a communication I/F 81. The control section 61 can thus exchange information, via the communication I/F 81, with a LAN-compatible hard disk drive (HDD) that is connected to the first LAN terminal 82. In doing so, having a dynamic host configuration protocol (DHCP) server function, the control section 61 controls the LAN-compatible HDD connected to the first LAN terminal 82 by assigning an Internet protocol (IP) address to it. Although not shown in Fig. 1, the control section 61 may also be connected to a second LAN terminal via another communication I/F.

The control section 61 is connected to a USB terminal 84 via a USB I/F 83. The control section 61 can thus exchange information, via the USB I/F 83, with individual devices that are connected to the USB terminal 84.

The control section 61 is connected to an i.Link (registered trademark) terminal 86 via an i.Link I/F 85. The control section 61 can thus exchange information, via the i.Link I/F 85, with individual devices that are connected to the i.Link terminal 86.

Furthermore, the control section 61 can exchange information, via a high definition multimedia interface (HDMI) I/F 87 which complies with the HDMI standard, with individual devices that are connected to an HDMI terminal 88.

Incidentally, the control section 61 also includes a reception channel control section 621, a service information storage section 622, a particular station search section 623, a first updating section 624, a second updating section 625, a display control section 627, and a manipulation input processing section 626.

The reception channel control section 621 controls a receiving section so that it tunes in to the channels of multiple stations selectively. The receiving section consists of the tuners 45, 50, etc. The service information storage section 622 is a section for storing pieces of service information relating to programs to be transmitted on the channels of plural stations. The particular station search section 623 analyzes prescribed management information that is transmitted on the channel selected by the receiving section while the reception channel is switched by the receiving section, and thereby determines whether the station corresponding to the selected channel is a special station which is sending pieces of service information of itself and other stations. In a state that the channel of a special station is selected, the first updating section 624 acquires pieces of service information that are transmitted on that channel and updates the existing pieces of service information of the respective stations stored in the service information storage section 622. On the other hand, when there is no special station that is sending pieces of service information of itself and other stations, the second updating section 625 causes tuning to multiple stations selectively and updates the existing pieces of service information of the respective stations stored in the service information storage section 622.

For example, the timing of operation of the first updating section 624 may be immediately after power-on of the apparatus. Alternatively, a certain update period for the first updating section 624 may be set after a power-off manipulation (i.e., the apparatus is not powered off as soon as the power-off manipulation is made). For example, the timing of operation of the second updating section 625 may be during a standby period of the apparatus. Alternatively, a certain update period for the second updating section 625 may be set after a power-off manipulation (i.e., the apparatus is not powered off as soon as the power-off manipulation is made).

As a further alternative, the stored pieces of program guide information may be updated positively in response to a program guide information update manipulation, which will be described further later. At this time, the manipulation input processing section 626 and the display control section 627 also operate.

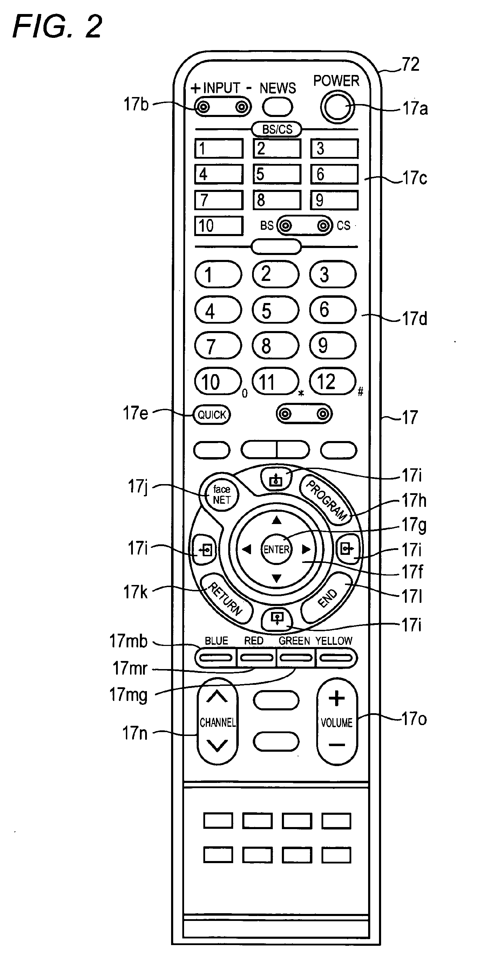

Fig. 2 shows an appearance of the remote controller 72. The remote controller 72 is mainly provided with a power key 17a, an input switching key 17b, satellite digital broadcast channel direct selection keys 17c, terrestrial broadcast channel direct selection keys 17d, a quick key 17e, a cursor key 17f, an enter key 17g, a program table key 17h, page switching keys 17i, a face net (navigation) key 17j, a return key 17k, an end key, 171, blue, red, green color keys 17mb, 17mr, and 17mg, a channel up/down key 17n, a volume adjustment key 17o, etc.

Pieces of program guide information are displayed upon pressing of the program table key 17h. A state of displaying video on a currently selected channel is restored upon pressing of the end key 171.

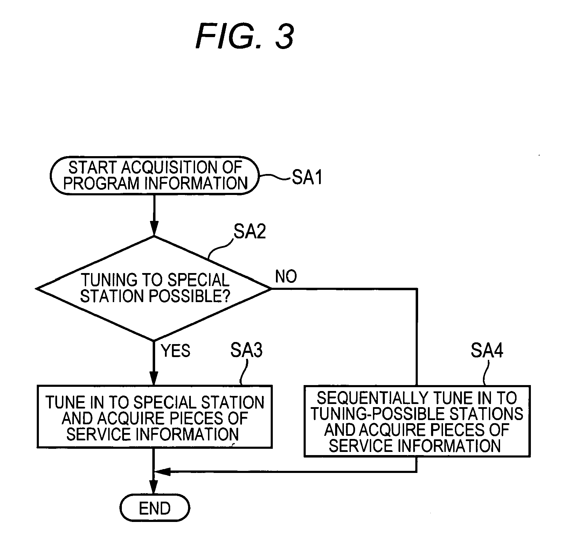

Fig. 3 is a flowchart of an example process that is characteristic of the above-described digital TV broadcast receiving apparatus 41. When acquisition of program information has been started at step SA1, it is determined at step SA2 whether the receiving section is tuned to the channel of a station (called a special station here) which sends pieces of service information of all stations (or the special station itself and other multiple stations). If it is found that a special station exists, at step SA3 pieces of service information sent from the special station are acquired and supplied to the service information storage section 622, whereby the existing pieces of service information of the respective stations are updated. If there is no special station, at step SA4 tuning is performed sequentially to select the channels of tuning-possible stations and pieces of service information are acquired from those stations. The acquired pieces of service information are supplied to the service information storage section 622 and the existing pieces of service information of the respective stations are updated.

The channel switching in the above process is controlled by the reception channel control section 621. Whether a special station exists is determined by the particular station search section 623. Step SA3 for updating the existing pieces of service information of the respective stations is basically executed by the first updating section 624. Step SA4 for updating the existing pieces of service information of the respective stations is basically executed by the second updating section 625.

As described above, in the apparatus according to the invention, it is determined whether the receiving section is tuned to the channel of a station (special station) which sends pieces of service information of all stations (or the special station itself and other multiple stations). Information (e.g., a flag) necessary for this judgment is described in, for example, a header that is contained in a transport packet stream (TS). Each TS packet is a set of a header and a payload. Packet identification information (PID) is found by analyzing the header. Whether the packet is a service information packet can be recognized by analyzing the packet identification information. If the packet is a service information packet, then it is determined whether the flag of a particular field (e.g., option field) is a prescribed flag. In this manner, it can be determined whether the currently selected channel is the channel of a station (special station) which is sending pieces of service information of all stations (or the special station itself and other multiple stations).

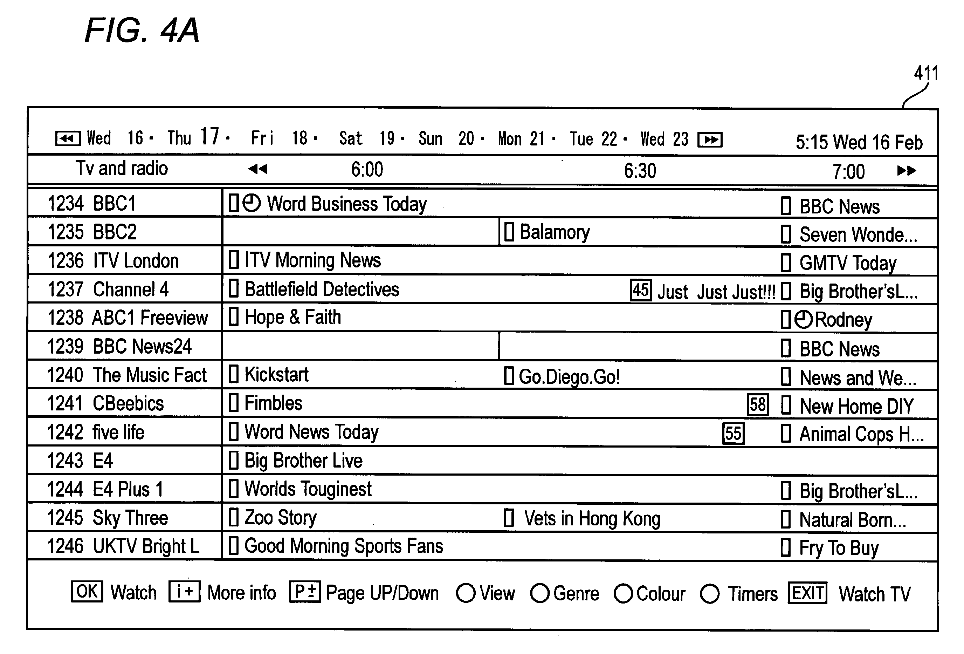

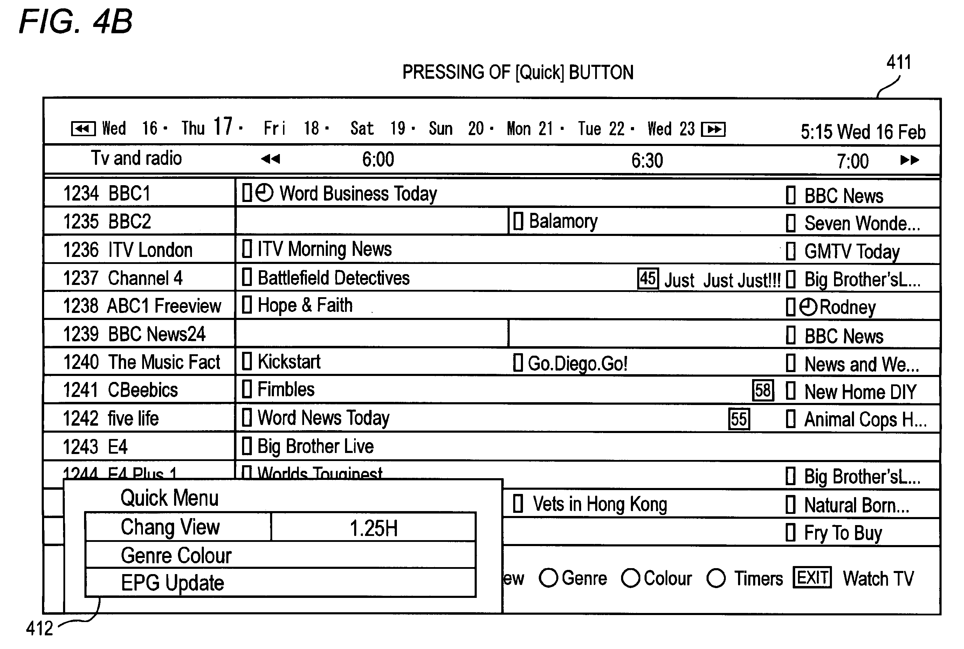

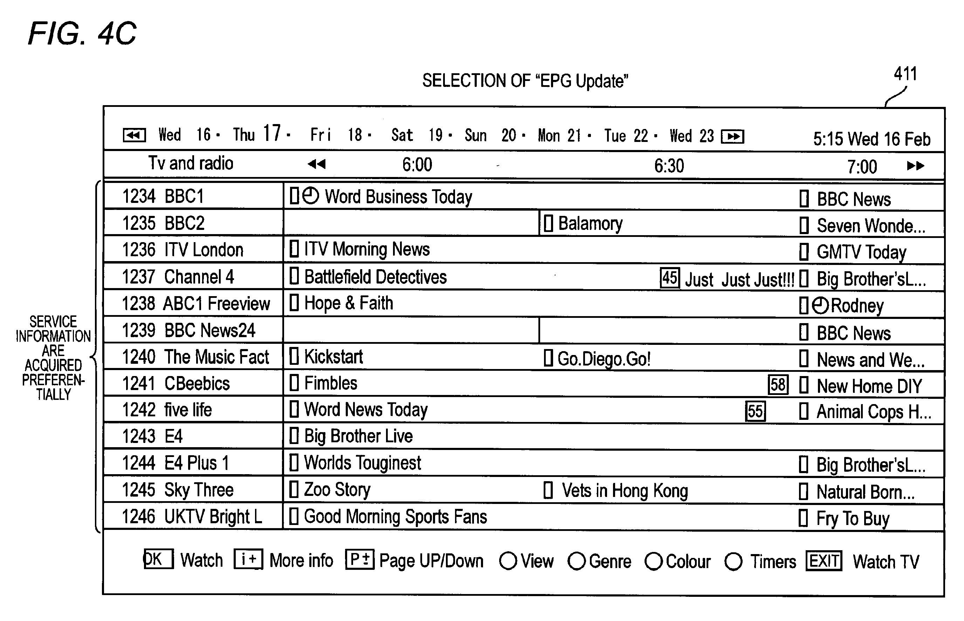

Figs. 4A-4C show graphic user interfaces (GUIs) which appear on the video display unit 57 as the existing pieces of program guide information are updated according to user manipulations. First, a program table 411 is displayed on the basis of the existing pieces of electronic program guide information in response to a manipulation of the program table key 17h. If the quick key 17e of the remote controller 72 is manipulated in this state, a quick menu 412 appears. The cursor is moved to the item "EPG Update" (included in the quick menu 412) for updating the pieces of electronic program guide information and the enter key 17g of the remote controller 72 is pressed. In response, acquisition of pieces of service information is started preferentially, that is, the process of Fig. 3 is executed. That is, the particular station search section 623 is activated when the item for updating the pieces of electronic program guide information is selected and then decided by manipulation inputs.

Although the program table shown in Figs. 4A-4C is such that station names are shown on the left side so as to be arranged in the vertical direction and time slots and associated program names are arranged in the horizontal direction, the display form of the program table is not limited to the above.

Although in the above description pieces of electronic program guide information are mentioned as example pieces of service information to be updated, the term "service information" as used in the invention is not limited to electronic program guide information and may be any of various kinds of information. For example, the service information includes program arrangement information (SI), program specific information (PSI), etc. The PSI includes a program association table (PAT), a program map table (PMT), a network information table (NIT), a conditional access table (CAT), etc. The PAT is information for management of a program included in a stream, the PMT is information for management of A/V data etc., the NIT is information for management of network-related settings, and the CAT is management information for a chargeable broadcast.

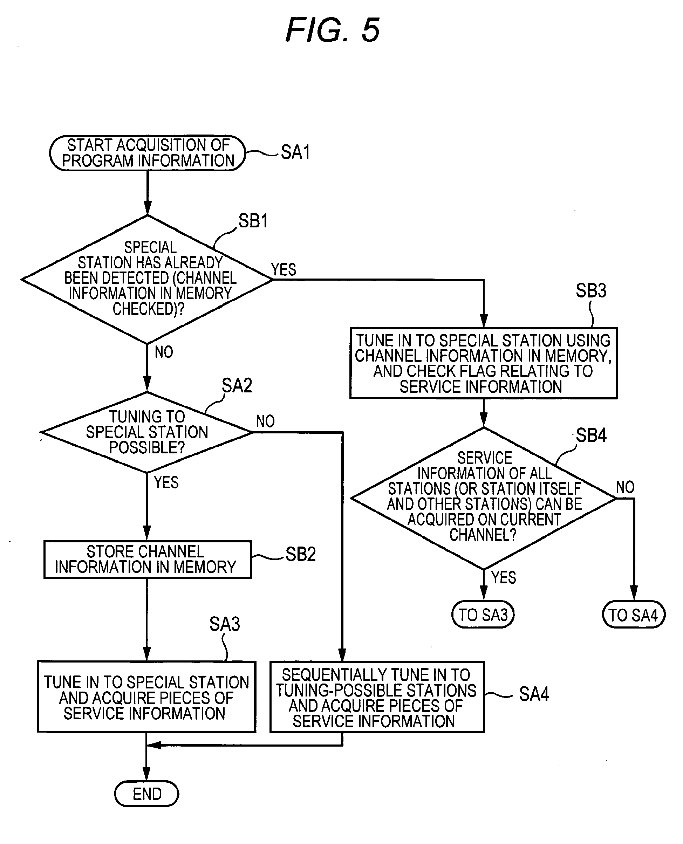

Fig. 5 is a flowchart of an example process which is characteristic of another embodiment of the invention. The process of Fig. 5 is such that steps SB1-SB4 are added to the process of Fig. 3. According to this embodiment, channel information necessary for selection of a special station can be stored in a memory. If it is found at step SA2 that a station (special station) exists which sends pieces of service information of all stations (or the special station itself and other multiple stations), at step SB2 channel information of the special station is stored in a memory. With this measure, when acquisition of pieces of program information has been started, whether channel information for tuning in to a special station has already been acquired can be determined at step SB 1. If channel information for tuning in to a special station has already been acquired, at step SB3 tuning is performed to select the channel of the special station by using the acquired channel information and a flag relating to service information is detected. At step SB4, it is determined whether the flag indicates that the station is such as to send pieces of service information of all stations (or the special station itself and other multiple stations). The result of this judgment makes it possible to determine whether pieces of service information of all stations (or a special station itself and other multiple stations) can be acquired on the current reception channel. The process moves to step SA3 if this is the case, and moves to step SA3 if this is not the case.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A video signal processing apparatus comprising:
a receiving section for receiving broadcast signals;
a reception channel control section for controlling the receiving section so that the receiving section selectively tunes in to channels of a plurality of stations;
a service information storage section for storing service information relating to programs to be transmitted on the channels of the plurality of stations;
a particular station search section for analyzing certain management information that is transmitted on a channel when a tuned channel at the receiving section is switched to the channel, so as to identify whether a station corresponding to the selected channel is a special station sending the service information thereof and of other stations;
a first updating section for acquiring the service information of the plurality of stations transmitted on the channel of the special station when the receiving section is tuned to the channel of the special station, and for updating the service information of the respective stations stored in the service information storage section; and
a second updating section for acquiring the service information of the plurality of stations by controlling the receiving section to sequentially tune in to channels of the plurality of stations when the particular station search section fails to identify the special station, and for updating the service information of the respective stations stored in the service information storage section.

2. The video signal processing apparatus according to claim 1,
wherein the service information includes electronic program guide information.

3. The video signal processing apparatus according to claim 1, further comprising a display control section for outputting data of the service information including electronic program guide information stored in the service information storage section to a video display unit in response to an operational input.

4. A control method of a video signal processing apparatus, wherein the apparatus comprises: a memory and a control section for controlling a receiving section for receiving broadcast signals, the method comprising:
controlling the receiving section so that the receiving section selectively tunes in to channels of a plurality of stations;
storing service information relating to programs to be transmitted on the channels of the plurality of stations;
analyzing management information that is transmitted on a channel when a tuned channel at the receiving section is switched to the channel, so as to identify whether a station corresponding to the selected channel is a special station sending the service information thereof and of other stations;
acquiring the service information of the plurality of stations transmitted on the channel of the special station when the receiving section is tuned to the channel of the special station;
acquiring the service information of the plurality of stations by controlling the receiving section to sequentially tune in to channels of the plurality of stations when the special station is not identified in the analyzing step; and
updating the service information of the respective stations stored in the memory.
